# EUROPEAN PATENT SPECIFICATION

(11) **EP 1 477 012 B1**
(45) Date of publication and mention of the grant of the patent: **23.09.2009**
(21) Application number: 03704581.2
(22) Date of filing: 10.02.2003
(51) Int. Cl.: H04M 1/2745, H04M 1/56, G04G 9/00

(54) **TELEPHONE NUMBER MODIFICATION**
TELEFONNUMMERÄNDERUNG
MODIFICATION DE NUMERO DE TELEPHONE

(30) Priority: 08.02.2002 GB 0203017
(43) Date of publication of application: 17.11.2004
(73) Proprietor: CAGNEY, Francis, 80797 Munich (DE)
(72) Inventor: CAGNEY, Francis, 80797 Munich (DE)
(74) Representative: Hughes, Andrea Michelle
(86) International application number: PCT/EP2003/001292
(87) International publication number: WO 2003/067860

(56) References cited:
- EP-A- 0 530 010
- EP-A- 0 631 418
- EP-A- 0 961 460
- GB-A- 2 355 624
- US-A- 5 216 709
- US-A- 5 341 413
- FRANK R: "CELLULAR PHONE WITH PHONEBOOK FOR INTERNATIONAL DIALLING" MOTOROLA TECHNICAL DEVELOPMENTS, MOTOROLA INC. SCHAUMBURG, ILLINOIS, US, vol. 37, January 1999 (1999-01), pages 4-5, XP000883850 ISSN: 0887-5286

## Description

The present invention relates to automatically modifying dialled telephone numbers for the convenience of the user. The invention is particularly, but not exclusively, applicable in mobile or cellular telephones.

All telephone numbers can comprise up to four components: the international access code, the country code, the area (trunk) code and the local number. Depending on the location of the caller and the called party, the caller may need to dial all four components, or only two or, if calling within the same local area, only the local number.

Thus, a caller calling a called party in a different country needs to dial the international access code, the country code, the area code and the local number. A caller in the same country as the called party but in a different area need only dial the area code and the local number. A caller calling within the same area as the called party need only dial the local number. Of course, a caller will usually use the shortest form of the number possible.

Mobile telephone numbers follow a similar pattern in that they comprise a country code, a service provider code (rather than an area code) and a local number. Otherwise, the principle is the same.

The international access code as recognised by the telephone system is '+'. A mobile phone will interpret the '+' as the international access code and will then convert this, when dialling, to the number required in that particular country to make international calls. In most countries this is 00, but in the USA and Canada this is 011.
Users, when making an international call, will usually use 00 or 011 instead of the generic code +.

As an example, a person in Munich, Germany may have a local number 123456. The area code for Munich is (0)89. The country code for Germany is 49. To call that person from a telephone in Munich, the caller needs only dial 123456. To call that person from elsewhere in Germany, the caller needs to dial 089 123456. To call that person from England, the caller needs to dial the International access code for making international calls from England, i.e. 00 or the generic code +, followed by the country code 49, followed by the area code and local number 89 123456.

Similarly with some mobile telephone service providers, to call a person in the same country with the same service provider, only the local number need be dialled. If the service providers are different, the service provider code, followed by the local number needs to be dialled. From another country, the international access code or number followed by the service provider number and the local number needs to be dialled.

Mobile telephones (and, also, some land line telephones) have electronic telephone books in which the user can store numbers which he frequently dials, together with the name or some other information about the number stored. Then whenever the caller needs to call that same number he can call it up from the telephone book memory and, by pressing a single 'dial' button can call the number without the need to physically dial the number again using the keypad. Such electronic telephone books take a variety of forms.

On the GSM system, a smart card or SIM (System Identity Module) is used to provide the authorization information needed to access the mobile telephone network. It also contains the encryption keys needed to provide protection against electronic eavesdropping. The SIM also contains an electronic phone book, which consists of address entries each containing a telephone number and space for about 30 characters to store the corresponding name or other information, in the same way as a standard 'hard copy' telephone book.

Alternatively, GSM and other mobile phones may have electronic address books stored in internal, non-volatile memory.

A further feature is that when the user is called, the telephone software will search through the numbers stored in the telephone book. If the calling party ID (i.e. the telephone number of the person calling) corresponds to a stored number, the information stored in the telephone book alongside that number will be displayed. The calling party ID is always received by the called telephone in full international form. However, in modern mobile telephones a comparison will also be made with shorter forms stored in the telephone book (i.e. the telephone software will also compare the last part of the full international calling party ID with the local numbers stored in the electronic telephone book.

Another feature of mobile telephones and their telephone books is that when the user dials a number he is provided with the option of saving that number in the telephone book, in the form in which it was dialled.

These storage and address book features are all very useful in today's mobile telephone dominated society, where people tend to rely more and more on electronic storage means rather than written records. It is most convenient for all telephone numbers which a user often dials to be stored in the telephone itself and for the user to be able to store new numbers as they are dialled, rather than having to write the numbers down in a separate paper-copy telephone book, which the user then always needs to have with him, if these numbers are to be readily available.

A problem or failing in this form of number storing and dialling has, however, been identified by the inventor.

As mentioned above, dialled numbers, if saved straightaway into the telephone book, are stored in the form in which they were dialled. Thus, if the user dialled a number in the same country, using the shortest possible form, the number would have been dialled without the international access number or code and without the country code. Further, if the user was calling a telephone with the same service provider code (or, in the case of land line telephones, with the same area code) then the number would have been dialled as the local number only.
This is how that number would be stored in the address book, if using the simple, automatic 'save in address book' function.

This is not a problem if the caller then wishes to call that party again from the same country and using the same service provider/area code. All he needs to do is call up the number from the address book, press the 'dial' button and the number stored is automatically dialled.

However, if the user wishes to call the same party from another country, say, then the stored number, not being in the full international format, will not be recognised and the call could not be made simply using the telephone book call up function and the single 'dial' button - i.e. using that function, the number dialled would not have the required international access code and country code. To make the call, the user would then have to physically dial the entire international number or would need to correct the stored number.

As well as the inconvenience of needing to re-dial the entire number, it may also be necessary for the caller to first write down the local number from the electronic telephone book, since, when re-dialling the full number, the stored number would disappear from the display.

Another problem is that the caller may not actually know the country code of the country he is trying to call, and may also not be aware of the correct international dialling code and any necessary trunk codes etc.

EP-A-0631418 discloses a system for expanding a called number into canonical i.e. full international form based on the canonical form of the caller telephone number. This assumes, however, that missing parts of the called number are the same as the caller number.

EP-A-0530010 discloses a method of storing telephone numbers in an abbreviated form and then expanding them to an appropriate form depending on the location of the caller.
The disclosed method is limited to a specific group of countries.

The aim of the present invention, therefore, is to overcome these problems by automatically modifying a dialled number into a standard international number before saving it in the telephone book, irrespective of the form in which the number is actually dialled. The number then stored in the telephone book is then stored in a form in which it can be dialled to make the required call from anywhere in the world.

The modified, international format number is also the number which will be stored in the telephone's redial memory, which is a memory which stores say the last ten numbers called. These numbers can be automatically redialled merely by calling up the redial memory, selecting the required number and pressing a single 'dial' button. It is also possible to save numbers from the redial memory to the telephone book.

A first aspect of the present invention provides, a method of automatically modifying, in a mobile telephone, a telephone number entered, the method comprising the steps of: providing a database relating Mobile Country Codes (MCCs) to corresponding information on dialling procedures, including country codes, for the countries indicated by the MCCs; obtaining an MCC from a network that the telephone is in communication with for indicating the country of the network, comparing the entered telephone number with dialling procedure information from the database for the obtained MCC when the telephone number is entered; and depending on the comparison step, modifying the entered telephone number into a full international format, i. e. including an international access code as a +, a country code and a local number.

The way in which the method operates in the preferred embodiment is that the format of a full international call number for any MCC is known or previously determined. The MCC for the country from which the number is dialled is determined. The number dialled is compared with the full international format for that MCC. If the number dialled does not match the predetermined format, it is determined whether the dialled number only corresponds to the last part of the predetermined format, thus indicating that the number was dialled as a local number, without an area code, country code or International access code, or whether the dialled number only corresponds to the last two parts (plus trunk code if appropriate) of the format, thus indicating that the number was dialled without a country code or International access code, or if the number corresponds essentially to the full format but uses numbers instead of the generic International access code +.

The method then involves determining which of the parts of the full format were missing from the dialled number and adding these in front of the dialled number. The number dialled is then thus modified to full international format and can be stored in the telephone in this form. This means that the stored number can then be called up and dialled from anywhere in the world and will be in the correct format to make the connection.

It may also be advantageous for the user of a telephone, using the method as described, to be aware of the name of the country which they are calling and of the current time in the country they are calling. The user may be attempting, for example, to contact a business and it may be of use to be prompted by the telephone that the call is being made outside of business hours in that country for example, or they may be calling a friend for a chat not realise that it is in the early hours of the morning where the friend is.

The system of the invention may also, therefore, preferably be adapted to determine and, if desired, display the name (or perhaps some indication thereof) of the country which is being called. Preferably, the time (or an indication of time) of the country being called and/or the time difference (or an indication thereof) between the country being called and the country from which the call is being made or from certain standard time zones such as GMT or Central European Time (CET). The user can thus be advised of the time in the country being called and can, in a preferred embodiment, be alerted to particularly inappropriate times to call by, e. g., an audio and/or visual alarm. Preferably, the user's confirmation can then be so that the user still wishes to proceed with the call if the time in the country being called is inappropriate. In one embodiment, 'inappropriate' times or time limits can be set by the user.

Preferably the system can also indicate to the user the name of the country they are currently calling from. This could be of interest if the user is actually camped on a network in a neighbouring country when close to the border. The system can also display the time in the country of the network in which the user is camped on.
A second aspect of the present invention provides, a mobile telephone capable of automatically modifying a telephone number entered by a user, including: means for accessing a database relating Mobile Country Codes (MCCs) to corresponding information on dialling procedures, including country codes, for the countries indicated by the MCCs; means for obtaining an MCC from a network that the telephone is in communication with for indicating the country of the network; means for comparing the entered telephone number with dialling procedure information from the database for the obtained MCC when the telephone number is entered; and means for modifying the entered telephone number to a full international telephone number, i. e. including an international access code as a +, a country code and a local number;

The telephone preferably has means for storing the modified number for subsequent redial.

In another aspect, the invention comprises a computer program run in a telephone, for carrying out the above method, and, in another aspect, the invention comprises a telephone programmed to operate in accordance with said program.

Preferred embodiments of the invention will now be described by way of example only.

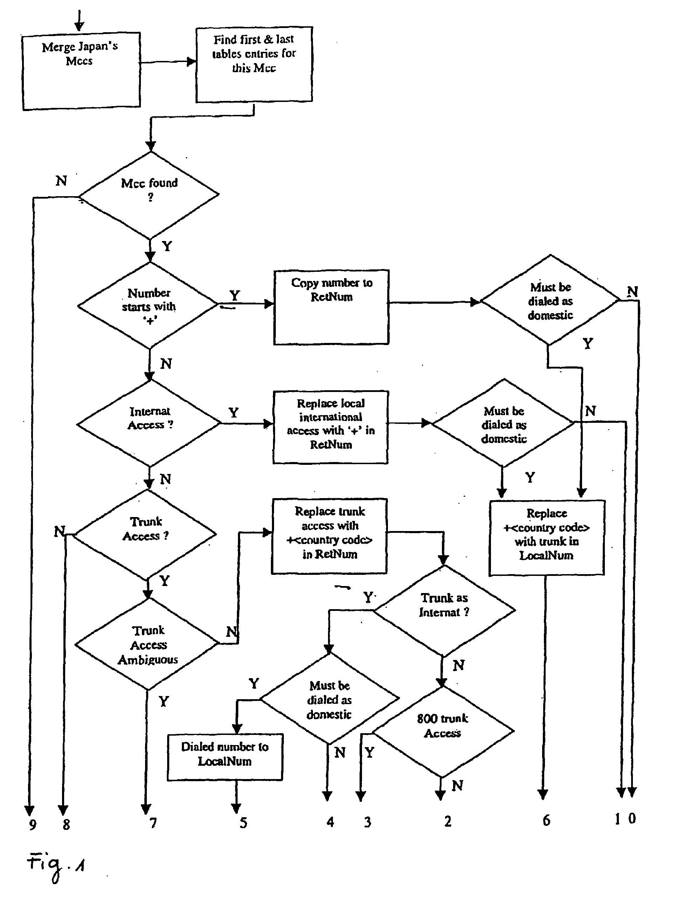

Fig. 1 is a flow chart showing an embodiment of the inventive method.

A mobile telephone regularly communicates with base stations allocated to cells, so that the telephone and the service provider 'knows' where the mobile telephone is at any time. This is important for various reasons, including charging for calls and interpreting the number called. Each mobile telephone has its own ID when it places a call, this is the telephone's IMEI (International Mobile Equipment ID), and this includes information as to the home country of the subscriber.

The service provider also identifies itself to the mobile phone through its PLMN code, which comprises the MCC (Mobile Country Code), and the NCC (Network Colour Code). The mobile phone knows the country it is in (or at least the country the service provider is in) from the MCC. These codes are allocated according to an industry standard and the latest list of MCCs (also known as geographical area codes) are set out in an ITU-T document as an annex to ITU Operational Bulletin No. 741-1.VI.2001 and complement to ITU-T Recommendation E.212(11/98). Each country is allocated a three digit MCC. The list of codes is updated as necessary and current listings are available on the ITU home page http://www.itu.int/itu-t/bulletin.
This information is used in the present invention as will be described in detail below.

In another ITU-T standard document entitled 'Dialling procedures (international prefix, national (trunk) prefix and national (significant) number (in accordance with ITU-T recommendation E. 164 (05/97), as an annex to ITU Operational Bulletin No. 719-1.VII.2000, the ITU sets out the dialling procedures necessary for each country. The list contains the national (trunk) prefix, the international prefix, the country code and the national (significant) number for each country.

The national (trunk) prefix is the digit, or combination of digits, which must be dialled before an area (trunk) code when dialling a call to a subscriber within the same country but in a different numbering area. It provides access to the automatic outgoing trunk equipment. For example, in most European countries, this is 0. So, e.g. when calling from somewhere in Germany, but outside Munich, to a party in Munich, the trunk code which needs to be dialled is 0, followed by the area code for Munich, which is 89. Some countries are not allocated a national (trunk) prefix as they have a single nationwide numbering plan that does not use area codes, and all calls within the country are dialled just using the local number.

The international prefix is the digit or combination of digits which must be dialled before a country code when dialling a call to a country other than the one from which the call is being placed. In most countries where direct international calling is possible, the international prefix is 00.

The country code is a one, two or three digit code characterising the called country and is usually dialled after the international prefix. The list of country codes is also published in 'List of ITU-T Recommendation E.164 assigned country codes' as an annex to the Operational Bulletin.

The national (significant) number is the number to be dialled following the national (trunk) prefix to reach a party in the same country but in a different local network or numbering area. This number consists of the area code followed by the local or subscriber number.

For some countries, there are additional or different dialling procedures and information as to these is contained in the notes to the above described annex. These include the following:
When calling Sao Tome and Principe from other countries it is necessary to prefix the subscriber number with 12.
When dialling from Ireland to Northern Ireland, the area code may be prefixed by 048 instead of 0044.
When dialling from San Marino to Italy the subscriber must be used without the prefix 0039, and from Italy to San Marino the subscriber number must be prefixed by 0549 instead of 00378.

Again all of this information is used in the present invention as described below.

First, a database for use by the telephone software, needs to be compiled from the information contained in the two documents described above. Whilst the way in which this database is compiled is not essential to the invention (provided an identifier such as the MCC and the corresponding dialling procedures is generated),in the preferred method a program is used to form this database which, in the preferred embodiment, is not actually used in the mobile telephone, but, rather, is used to generate the database for use by other software which is incorporated in the phone. Thus, the program for generating the database does not need to be written to high quality, portability, mobile telephone software standards.

The basic function of this program is to merge the information contained in the two documents described above, to build a database of dialling procedures for each MCC.

In the preferred embodiment, the two documents are downloaded in English and are saved as two text documents. The program compares the country names in both documents, so that a table of MCCs and dialling procedures can be generated. Some or all of the notes to the 'Dialling Procedures' document are also stored in special tables in the database.

The dialling procedures for each MCC are compressed into a code comprising only seven bytes for each entry. This extremely efficient coding means that for 227 MCCs, only 249 records or 1743 bytes are required to store all the necessary dialling information.

As the two starting documents sometimes use slightly different versions of the country names, and since some country names are very similar, the program has to be carefully designed to ensure that a correct correlation is made between the countries listed in the Mobile Country Code document and the Dialling procedures document, so that the correct dialling procedures are allocated to the correct MCCs.

The preferred program runs as follows:
First, the program associates the countries in the MCC document with corresponding countries in the Dialling Procedures document. As mentioned above, these documents do not always refer to the same countries by exactly the same name. For example, in the MCC document reference is made to Argentine Republic, whereas the corresponding country is referred to in the Dialling Procedures document as Argentina. The program must, therefore, not only match identical country names but also identify different versions of the same country name.

The two sets are data are then merged to produce a table of dialling procedures against MCCs for each country. This may be done as follows:
The program produces a table from the MCC document, in which the information for each country is spread over two lines. There are two lists - one list of MCCs, and a second list of countries listed alphabetically. The program repeatedly takes in a line from this information, until the end of the list is reached.
The program waits for the first line containing three decimal digits - this is the lowest MCC. This MCC is then extracted. The corresponding country is then extracted and the dialling procedure which best matches this country is located from the dialling procedure document.

This may be done by first extracting each word from the MCC/country listing and determining the length of each word and the number of words in a country name. Certain words have special significance e.g. 'Democratic', 'Republic' and 'American' and the program searches through the words to see if any of these strings are present.

A rating is given to each word in the MCC country, evaluating how it matches the words in the table of dialling procedures.

The country names in the dialling procedures listing are extracted in a similar way.

For each MCC country word, a comparison is made with all the dialling procedure country words. 'Bonus' points are allocated for certain matches and the greatest number of points is a determination of the 'best match'.

For each best match found, one or more records in the database are generated.

This process is repeated until all MCCs have been processed.

As mentioned above, the system is most efficient if the entries are stored in a compressed form (although the invention will still work if uncompressed data records are used).

Each MCC (for the majority of countries) requires only one record - i.e. a six byte MCC record. The corresponding dialling procedure for that MCC is encoded into 4.5 bytes (or 9 nibbles).

The country code, Trunk and International Access code are compressed as BCD strings in the 4.5 byte codes. All unused digits are hex A. The MCC takes up nibbles 0 - 2. The country code takes up nibbles 3 - 5, the Trunk code is contained in nibbles 6 - 7 and the international access code is contained in nibbles 8 - 11. The last two nibbles of the international access code are seldom needed for the international access number itself (which, in most cases in 00, but can be 011) and so the last two nibbles can have a special meaning and are referred to here as the 'append nibble' and the 'control nibble'. These nibbles are initialized to A, meaning unused.

Those countries with unusual dialling procedures, as set out in the notes to the dialling procedures document as mentioned above, use the append and control nibbles to indicate the unusual features.

For example, Ireland, Italy, Malaysia and Singapore have a special trunk code for dialling another country. Tanzania has two trunks for two countries. In the preferred embodiment this extra data is incorporated into the trunk access and country code nibbles and the control nibble is set to indicate this.

Italy has a four digit trunk access and so the append nibble is used to extend the trunk access to up to five digits. Similarly, the append nibble is used to extend the country code for Sao Tome and Principe. Aruba has an ambiguous trunk access, which cannot be interpreted and this is indicated in the control nibble.

Thus, the information is stored in an encoded form, in the form of a table wherein, for each entry, the MCC is represented as a 3 nibble integer and then the country code, trunk access (or national prefix) and international access number are encoded as 9 nibbles in 4.5 bytes, where, in the preferred code, a hex A is inserted if the nibble is not used. The following table is a copy of the contents of the database with the encoded information for each MCC.

The first 34 records of the database are shown below.

Greece has the lowest MCC hex 202. Its country code is 30, trunk access is 0, and international access is 00. Yugoslavia MCC hex 220 has country code 381, trunk access 0, and international access 99.

Italy MCC hex 222 needs two records. The first record tells us this MCC has country code 39, no trunk codes, and international access 00. The second record uses both the append nibble value b, and control nibble value d. The first two digits of international access are appended to the trunk access giving trunk access 0549. The control nibble indicates that dialling this trunk code actually dials country code 378 instead. It also indicates that this number must be dialled as +378 from outside Italy, but in Italy must be dialled as 0549 instead.

The United Kingdom has two MCCs, while Sweden and Finland have many international access codes.
{0x202. {0x30, 0xa0, 0xaa, 0x00, 0xaa }}, /* 30/0/00// Greece */
{0x204, {0x31, 0xa0, 0xaa, 0x00, 0xaa }}, /* 31/0/00// Netherlands */
{0x206, {0x32, 0xa0, 0xaa, 0x00, 0xaa }}, /* 32/0/00// Belgium */
{0x208, {0x33, 0xa0, 0xaa, 0x00, 0xaa }}, /* 33/0/00// France */
{0x212, {0x37, 0x7a, 0xaa, 0x00, 0xaa }}, /* 377//00// Monaco */
{0x213, {0x37, 0x6a, 0xaa, 0x00, 0xaa }}, /* 376//00// Andorra */
{0x214, {0x34, 0xaa, 0xaa, 0x00, 0xaa }}, /* 34//00// Spain */
{0x216, {0x36, 0xa0, 0x6a, 0x00, 0xaa}}, /* 36/06/00// Hungary */
{0x218, {0x38, 0x70, 0xaa, 0x00, 0xaa }}, /* 387/0/00// Bosnia and Herzegovina */
{0x219, {0x38, 0x50, 0xaa, 0x00, 0xaa }}, /* 385/0/00// Croatia */
{0x220, {0x38, 0x10, 0xaa, 0x99, 0xaa }}, /* 381/0/99// Yugoslavia */
{0x222, {0x39, 0xaa, 0xaa, 0x00, 0xaa }}, /* 39//00// Italy */
{0x222, {0x37, 0x80, 0x54, 0x9a, 0xbd }}, /* 378/0549//bd/ .... */
{0x225, {0x39, 0xaa, 0xaa, 0x00, 0xaa }}, /* 39//00// Vatican */
{0x226, {0x40, 0xa0, 0xaa, 0x00, 0xaa }}, /*40/0/00// Romania */
{0x228, {0x41, 0xa0, 0xaa, 0x00, 0xaa }}, /* 41/0/00// Switzerland */
{0x230, {0x42, 0x00, 0xaa, 0x00, 0xaa }}, /* 420/0/00// Czech Rep. */
{0x231, {0x42, 0x10, 0xaa, 0x00, 0xaa }}, /* 421/0/00// Slovakia */
{0x232, {0x43, 0xa0, 0xaa, 0x00, 0xaa }}, /* 43/0/00// Austria */
{0x234, {0x44, 0xa0, 0xaa, 0x00, 0xaa }}, /* 44/0/00// United Kingdom */
{0x235, {0x44, 0xa0, 0xaa, 0x00, 0xaa }}, /* 44/0/00// United Kingdom */
{0x238, {0x45, 0xaa, 0xaa, 0x00, 0xaa }}, /* 45//00//Denmark */
{0x240, {0x46, 0xa0, 0xaa, 0x00, 0x7a }}, /* 46/0/007// Sweden */
{0x240, {0x46, 0xaa, 0xaa, 0x00, 0x9a }}, /* 46//009// .... */
{0x242, {0x47, 0xaa, 0xaa, 0x00, 0xaa }}, /* 47//00// Norway */
{0x244, {0x35, 0x80, 0xaa, 0x00, 0xaa }}, /* 358/0/00//Finland */
{0x244, {0x35, 0x8a, 0xaa, 0x99, 0x0a }}, /* 358//990// .... */
{0x244, {0x35, 0x8a, 0xaa, 0x99, 0x4a }}, /* 358//994// .... */
{0x244, {0x35, 0x8a, 0xaa, 0x99, 0x9a }}, /* 358//999// .... */
{0x246, {0x37, 0x08, 0xaa, 0x81, 0x0a }}, /* 370/8/810// Lithuania

This database thus stores all relevant dialling procedure information for each MCC (i.e. for each country - referred to by its MCC - i.e. by a code which is recognised by the mobile telephone).

The database may also be augmented to include specific dialling codes for use in the United States of America where the North American Numbering Plan (NANP) is also used. All NANP codes have 1 as the country code. The three digits that follow are either the area code for USA/Canada, or the code for a country in the NANP.
For example, +1212 dials New York City in the USA, but +1242 dials the Bahamas. In the preferred embodiment, the first 21 entries in the country code table are the three digits NANP codes sorted alphanumerically. The preceding one is implicit and need not be stored in the tables. NANP codes are relevant either for a number dialled as 1nnn in the USA, or +1nnn outside the USA. In either case, it is interesting to know the NANP country you are really dialling.

If a number in the form +1nnn is dialled, the system will first search through the NANP codes to see if it recognises the country. If no matching NANP code is found then the code is considered to be the area code for somewhere in the USA or Canada.

In the database of dialling procedures, there are a number of 'ambiguous' country codes:

| | |
|---|---|
| 1 | USA/Canada |
| 269 | Comoros/Mayotte |
| 39 | Italy/Vatican |
| 7 | Russia/Kazakstan |

There are three records for each ambiguous country code. The first record has country names and, if required, time zones (discussed further below) merged. This record will be found if searching for the country when the user dials an international code. The database also includes records for the individual countries with ambiguous country codes and these records are accessed through the MCC or country name.

Of course, as mentioned above, the way in which the information is collated and encoded is not essential to the invention - and any known ways of collating and storing in an accessible way, this information may be used.

The normal language name, or an understandable indication of the normal language name e.g. USA for America, for that country. The country name can, for example, be determined and stored during the step, as described above, of compiling the MCC information.
For example, during the step of correlating the country name in the Mobile Country Code document and the Dialling Procedures document, the actual country name can also be stored as an extra entry for each MCC in the database. Alternative methods of determining the normal language name of the country could also be used to correlate the MCC with the country name. Furthermore the country name may also be determined and/or stored in different languages.

Furthermore, in this embodiment of the invention the time zone for the country being called and the time in the country being called can also be determined. The time in the country being called can be determined in the preferred embodiment from information contained in the database in combination with a known standard time e. g. GMT and/or the time in the country where the call is being made.

One way to derive the time zone for a country being called is to determine the difference from Greenwich Mean Time (GMT) of that country. For example, in a similar way to the way the MCC and Dialling Procedure information is derived by comparing the country names in two documents, the time zone for a given country name can also be determined by comparing the country name against a document containing a list of country names and their associated time zone, measured from Greenwich Mean Time (GMT). Tables containing such information are easily available for example on the Internet.

Seasonal changes may also be stored in the database to determine the time difference throughout the year, for example to account for clock changes in certain countries such as, for example, British Summer Time (BST).

The second part of the invention, in the preferred embodiment, is performed by a program which identifies the MCC for the calling telephone i.e. the country in which the call is being made, and the number dialled and compares this with the information on dialling procedures for the same MCC, as stored in encoded form in the database described above, to determine whether the number was dialled as a local number, as an area code (or service provider code) plus local number, as an international number, but using 00 or 011 as the international access code, or as a standard format international number i.e. using + as the international access code. The system then uses this information to convert the dialled number to a standard international format number irrespective of how it was dialled (unless the format was already the international standard format). If the dialled number is then stored in the redial memory and/or the telephone book, it is stored in full international format and so can be automatically and directly dialled from the memory or telephone book from anywhere in the world. Fig. 1 is a flow chart outlining one way of carrying out this method.

In outline, this part of the process compares the MCC of the current network (i.e. of where the caller is) to the MCCs in the table and extracts the country code(s), international access code(s) and trunk access code(s) for the country.

Numbers dialled using a local international access code (e.g. 00 or 011) will be converted to +...

Numbers dialled with a trunk access code will be converted to + country code...

The calling software is also provided with a status function which indicates what changes were made (if any) to the number dialled. The calling software can use this status to advise the user the best way of storing the number, for example with status "This international number must be dialled as a trunk access in this country", both the full international number, and the special trunk access could be stored in the phone book. The following statuses may be returned:
The number was already perfect
Replaced local international access with +
Replaced trunk access with + followed by country code
As above, but this was an 800 number which often cannot be dialled internationally
Trunk access is really an international call-replaced trunk access with +country code
As above, but must be dialled as a trunk call
This international number must be dialled as a trunk access in this country
Trunk access in this country is ambiguous and the number is a trunk call
The number dialled was not understood
The MCC was not recognised.

In the preferred embodiment, the part of the invention which identifies the format of the number dialled, compares this with the stored format for that country, and converts the number to a global international number works as follows:
The MCC of the caller is identified. This MCC is then located in the table or database created as described above.

The number dialled is also identified.

If the number dialled begins with a '+', the dialled country code is compared to all country codes for this MCC. If the country code is found, the special tables are examined to see if the international access must be dialled as a trunk access.

If the number dialled did not start with a '+', the program then compares the number with the format stored for that MCC and picks out the longest international access code that matches the way the number was dialled. If there is a match, then, again, the dialled country code is compared to all country codes for this MCC. If the country code is found, the special tables are examined to see if the international access must be dialled as a trunk access.

Local international access numbers (00, 011) are converted to +

If there is no international access code match, the longest trunk access code that matches the way the number was dialled is picked out. If there is no match, the number has not been recognised and cannot be converted.

The trunk code may then be compared to an 0800 number and, if there is a match, the appropriate message (see above) is displayed.

The special tables are then examined to determine if this trunk access is actually a different country and/or if it must be dialled as a trunk and cannot be dialled internationally. Again, in such cases, the appropriate message may be displayed. If the international code is an international dialling to a country that must be dialled as a trunk access instead, the correct trunk access is incorporated into the local number.

If the trunk access code is recognised as an unambiguous trunk access for that country, the trunk access is replaced with a '+' followed by the country code. It should be noted that if the trunk code was for international access, the country code is not of the 'home' country but the one that is dialled with this trunk code.

The local number is the original dialled number.

The dialled number is then, wherever possible, converted to a global international number and can be stored in the usual way. The status, i.e. the modifications made, may then be displayed.

Various modifications can be made to the process to reduce the amount of data stored in the database. For example, Japan has two MCCs (440 and 441). Each MCC needs eight records. Rather than storing all of this information in the table, the second part of the system (i.e. the process for converting the dialled number) may, at the start check to see of, say, the MCC is 441 and, if so, knowing that this is Japan, set the MCC for the rest of the program to be 440. Alternatively, the database may include a single entry which describes Japan's international access codes. The entry for Japan will be a long entry.

As mentioned above, a useful feature would be for the user, when making the call, to be provided with information relating to the time in the country being called. Often, a person may make a call not thinking about the time difference between their own country and the country being called and this can result in a wasted call or in inconveniencing the person being called or embarrassing the caller.

Accordingly, in this most preferred embodiment, in addition to the information in the databases described above, a list of country names will also be stored together with corresponding time zones for those countries.

In the preferred embodiment, the database stores, alongside the MCCs, the normal language name, or an understandable indication of the normal language name e.g. USA for America, for that country. The country name can, for example, be determined and stored during the step, as described above, of compiling the MCC information. For example, during the step of correlating the country name in the Mobile Country Code document and the Dialling Procedures document, the actual country name can also be stored as an extra entry for each MCC in the database. Alternative methods of determining the normal language name of the country could also be used to correlate the MCC with the country name. Furthermore the country name may also be determined and/or stored in different languages.

Furthermore, in this embodiment of the invention the time zone for the country being called and the time in the country being called can also be determined. The time in the country being called can be determined in the preferred embodiment from information contained in the database in combination with a known standard time e. g. GMT and/or the time in the country where the call is being made.

One way to derive the time zone for a country being called is to determine the difference from Greenwich Mean Time (GMT) of that country. For example, in a similar way to the way the MCC and Dialling Procedure information is derived by comparing the country names in two documents, the time zone for a given country name can also be determined by comparing the country name against a document containing a list of country names and their associated time zone, measured from Greenwich Mean Time (GMT). Tables containing such information are easily available for example on the Internet.

Seasonal changes may also be stored in the database to determine the time difference throughout the year, for example to account for clock changes in certain countries such as, for example, British Summer Time (BST) .

To calculate the time in the country being called the program can simply compare the time zone of each country relative to, for example, Greenwich Mean Time and then use the current time in the country from which the call is being made and the difference between that and, say, GMT, to determine the current time in the country being called.

When employed in, for example a mobile telephone, one or any of the name of the country being called, the name of the country being called from, and the time in each or both countries can be displayed to the user on the display means of the telephone.

A further feature of the preferred embodiment in a telephone is that the user can be prompted that the time in the country being called is outside of predetermined business hours or socially acceptable hours and, furthermore, the user may be asked to confirm that they wish to proceed with the call. Such acceptable hours can be pre-determined by the user.

For example the user may be prompted with warning text and/or audio messages such as :
"The time in Germany is 23.30 - do you wish to proceed ?"
   or, when used in conjunction with numbers in the phone book of the telephone :
"The time at "home" is 06.00 - do you wish to call?"

The limits which trigger the messages can be defined by the user.

Of course, if the user wishes, messages can be triggered for every call.

The features of displaying the name of the country being called and time in the country together with the additional feature of prompting the user to confirm they wish to make the call can be selectively and independently activated or deactivated by the user or the manufacturer or service provider.

If these preferred features are incorporated into the system as described above in relation to Figure 1, the additional lists of country names and time zones will be stored as additional elements in the table or database which will, therefore, contain at least the following four entries: Country name; mobile country code (MCC); dialling procedure; and time zone.
In a more preferred embodiment, however, the data base containing the information required by the invention is divided into five tables:

| | |
|---|---|
| MCC | Mobile Country Code |
| CCODE | Country Code |
| CNAME | Country Name |
| TZ | Time Zone |
| DP | Dialling Procedures |

Most of the information in the tables is strings of decimal digits 0 to 9 representing country codes, international access and trunk access. A single decimal digit can be represented by a single nibble, so the tables will, essentially, be nibble oriented.

Some decimal strings are of variable length. For example, the country code is one, two or three digits. The country code for Germany, for example, is 49 so the first nibble is 4, the second nibble is 9 and the third unused nibble is set to A or 10. In general, in the preferred embodiment, unused nibbles are set to A.

The tables are all cross-referenced so most records have one or more indices to a record in another table. All indices are one unsigned byte given a range 0 to 255. If a fixed length table is being indexed, the index is a record pointer and if a variable length table is being indexed then the index is a byte pointer.

Thus, the country name, for example, could be accessed from the MCC, from the country code or from the dialling procedures table

In a preferred arrangement, the MCC table has a fixed record length of 6 nibbles organised as follows:

| | |
|---|---|
| nibbles 1 - 3 | MCC digit 1 - 3 |
| nibble 4 | unused |
| nibbles 5 - 6 | country code index |

The MCC is 3 hexadecimal digits and the table is sorted alphanumerically by MCC. Because the MCC is, as defined by the ITU, always three digits, it is effectively sorted numerically.

The country code index is 1 byte and points to the record in the CCODE table for this MCC.

If the country code is ambiguous, as described above, the MCC entry points to a record in the third section of the CCODE table.

In the country name table, the country names are split into two sections. In the first section, the country names are sorted alphabetically and this can be used to offer the user a look-up table based on country name. The second section has four records and contains the country names merged for ambiguous country codes. the country name is limited in length to the width of the full display.

There are two fields in the CNAME table - the country name and an index to a record in the country code table. In the preferred embodiment, records in the second section do not have an index into the CCODE table.

In a preferred embodiment, the country names can be translated into various languages and a translation program may be provided to do this. Preferably, after translation, the names will not be sorted alphabetically but the English language order should be maintained so that indices in the CCODE table remain valid.

If the user is to be presented with a sorted country name list of translated country names, a sort index can be created.

The country code table has fixed length records of 10 nibbles.

| | |
|---|---|
| Nibble 1 - 3 | country Code digit 1 - 3 |
| Nibble 4 | unused |
| Nibbles 5 - 6 | Country Name index |
| Nibbles 7 - 8 | Dialling procedure index |
| Nibbles 9-10 | Time Zone (index) |

The CCODE table is split into three sections. the first section is the NANP codes. The second section is the normal country codes including ambiguous country codes. The third section is only ambiguous country codes indexed by the MCC or CNAME table. The first two sections are sorted alphanumerically in that the country code as a number is not used, but a comparison of most significant digits down to least significant digits. As shown below 359 is followed by 36, by 370.

| | |
|---|---|
| 359 | Bulgaria |
| 36 | Hungary |
| 370 | Lithuania |

The country name index is 1 byte and indexes a record in the CNAME table.

The DP index is 1 byte and points to a record in the DP table for this country code. Records in the DP table are of a variable length so this index points to the start of the record.

The time zone index is 1 byte. If the country has just one time zone, then its time zone is stored encoded as positive quarter hours from the minus 12 hour zone. GMT is the 'base time' and is, in this embodiment, 48.

If the country has more than one time zone, the higher bit is set and the seven lower bits point to the start of a record in a variable record length time zone table.

The dialling procedure table has variable length records. It defines the trunk and international access codes. Many countries share the simpler dialling procedures, e. g. trunk 0, international 00. The first nibble defines the type of record 0-5.

Types 0 to 2 have records of length 4 nibbles as follows:

| | |
|---|---|
| Nibble 1 | Type |
| Nibble 2 | Trunk Access 1 digit |
| Nibbles 3 - 4 | International Access 2 digits |

Records of type 3 have records of length 6 nibbles as follows:

| | |
|---|---|
| Nibble 1 | Type |
| Nibbles 2-3 | Trunk Access 2 digit |
| Nibbles 4-6 | International Access 3 digits |

Records of type 4 are of length 13 nibbles as follows:

| | |
|---|---|
| Nibble 1 | Type |
| Nibble 2-4 | Trunk Access 3 digit |
| Nibbles 5-7 | Trunk Access 3 digit |
| Nibbles 8-10 | International Access 3 digits |
| Nibbles 11-13 | International access 3 digits |

Records of type 5 are of variable length:

| | |
|---|---|
| Nibble 1 | Type |
| Nibble 2 | Trunk Access 1 digit |
| Nibble 3 | count international access |
| Nibbles 4 - 7 | International Access 4 digits |
| Nibbles 8-11 | International access 4 digits |
| ... | |

Records of type 6 (trunk transfer) are of variable length. The first trunk code is a normal trunk access. The subsequent trunk accesses actually dial a different country as specified by the country code index:

| | |
|---|---|
| Nibble 1 | Type |
| Nibble 2 | Trunk Access 1 digit |
| Nibble 3 | Count Transfer trunks |
| Nibbles 4-6 | International Access 2 digits |
| Nibble 7 | Transfer Type |
| Nibbles 11-13 | Country code index |
| Nibble 14 | Transfer type |
| Nibbles 15-17 | Trunk access 4 digits |
| Nibbles 18-20 | country code index |

Single time zones are encoded directly into the CCODE table. Countries with multiple time zones access records in this table. Each byte defines a time zone in quarter hours from - 12 hours with code 0xff marking the end of the list. The last record defines all time zones and is relevant for satellite country codes and MCCs.

The other steps of the method, concerning the modification of the dialled number, are essentially the same as those described in relation to Figure 1.

The present invention, in the above description of a preferred embodiment, has been described in relation to converting numbers dialled by mobile telephone into standard or global international format. However, it is envisaged that the same principles could also apply to land-line telephones, and this number conversion could be done by the network for example software running in the MSC (Mobile Station Controller) could perform this type of analysis and conversion, returning the ideal number(s) to the mobile phone software.

Furthermore, the principles of the invention could also be used to make any desired modification of a dialled number, not necessarily just modification to an international format number.

For example, there is a service, available via the Internet, providing information on the cheapest networks for making calls in various regions. These networks are accessed by dialling a network code before the number of the called party.

In one embodiment of the invention, the number dialled could be modified to incorporate one of these network codes. In a further development, the system could be adapted such that the telephone calls up a gateway giving up-to-date information on the currently cheapest network, reads in that information and modifies the number to add the dialling code for that network at the start of the number.

Another application for the present invention may be in another currently available scheme for reducing telephone costs. It is possible to purchase pre-paid cards which give a certain amount of time for making calls, at below the normal cost of the network. A service provider number (an 0800 number) is dialled. The card owner enters a predetermined ID code and then the number to call. Using this service, costs for calls can be less than through the standard network. Such cards can also be used with mobile telephones. A user having such a card could enter the calling details into the mobile phone and when a number is dialled, the phone can choose the best calling card, call the access number, and pass over the ID, and the number the user wants to call, reducing call costs.

Many other applications may be envisaged for this invention, where there is an advantage in modifying a dialled number prior to storage and/or dialling/redialling.

## Claims

1. A method of automatically modifying, in a mobile telephone, a telephone number entered, the method comprising the steps of:
providing a database relating Mobile Country Codes "MCCs" to corresponding information on dialling procedures, including country codes, for the countries indicated by the MCCs;
obtaining an MCC from a network that the telephone is in communication with for indicating the country of the network,
comparing the entered telephone number with dialling procedure information from the database for the obtained MCC when the telephone number is entered; and
depending on the comparison step, modifying the entered telephone number into a full international format, i. e. including an international access code as a +, a country code and a local number.

2. A method as claimed in claim 1 wherein the mobile country codes are determined according to International Telecommunications Union standards.

3. A method as claimed in claim 1 or 2 wherein the full international format for any mobile country code is known or previously determined.

4. A method as claimed in claim 1, 2 or 3 wherein the standard full international form is determined from International Telecommunications Union standards.

5. A method as claimed in any preceding claim further comprising the step of storing the modified number in the telephone.

6. A method as claimed in any preceding claim further comprising the step of displaying the modified number on the telephone.

7. A method as claimed in any preceding claim, wherein the database comprises a plurality of MCCs, a plurality of country codes corresponding to the MCCs and a plurality of dialling procedures, wherein one or more of the plurality of dialling procedures is or are associated with each country code.

8. A method as claimed in any of claims 1 to 7, wherein information on special dialling procedures is stored on the database for at least one MCC, wherein the information on special dialling procedures relates to the country indicated by the at least one MCC and which are necessary for dialling between the country being dialled to and the country indicated by the obtained MCC when the number is entered; and
wherein the entered number is modified to take into account said necessary special dialling procedures.

9. A method as claimed in claim 8, wherein, when a country has special dialling procedures, an additional entry is made on the database for the MCC representing that country including information on the special dialling procedures.

10. A method as claimed in claim 9, wherein the MCC and the information on dialling procedures comprise a database dialling procedure entry; and wherein each entry includes an indication of special dialling procedures for the country indicated by the MCC.

11. A method as claimed in claim 10, wherein the indication of special dialling procedures indicates the additional entry.

12. A method as claimed in any of claims 8 to 11, wherein information on special dialling procedures is information on necessary dialling procedures between certain countries.

13. A method as claimed in any of claims 8 to 12, further comprising:
determining whether the telephone number entered must be dialled according to the special dialling procedures in the country where the number is entered.

14. A method as claimed in any of claims 8 to 13, wherein the special dialling procedures are determined from International Telecommunications Union standards.

15. A method as claimed in any preceding claim further comprising means for determining the name of the country being called.

16. A method as claimed in claim 15 wherein the name of the country being called is displayed to the user.

17. A method as claimed in any preceding claim further comprising determining the time in the country being called.

18. The method as claimed in claim 17 wherein the time of the country being called is determined by determining the time in the country indicated by the obtained MCC when the call is being made and the difference between the times in each country.

19. The method as claimed in claim 18 wherein the time of the country being called is determined from GMT and the time difference between the called country and GMT.

20. The method as claimed in claim 18 wherein the time of the country being called is determined from CET and the time difference between the called country and GMT.

21. The method as claimed in any of claims 17 to 20 further comprising means to indicate to the user the time of the call in the country being called.

22. The method as claimed in claim 21 wherein the current time in the country being called is displayed to the user.

23. The method as claimed in any of claims 17 to 22 wherein the user is prompted for confirmation that they wish to proceed with the call.

24. A mobile telephone capable of automatically modifying a telephone number entered by a user, including:
means for accessing a database relating Mobile Country Codes "MCCs" to corresponding information on dialling procedures, including country codes, for the countries indicated by the MCCs;
means for obtaining an MCC from a network that the telephone is in communication with for indicating the country of the network;
means for comparing the entered telephone number with dialling procedure information from the database for the obtained MCC when the telephone number is entered; and
means for modifying the entered telephone number to a full international telephone number, i. e. including an international access code as a +, a country code and a local number.

25. A telephone as claimed in claim 24 further comprising means for storing the modified number for subsequent redial.

26. A telephone as claimed in claims 24 or 25 wherein the telephone further comprises a display.

27. The telephone as claimed in claim 26 wherein the display is arranged to display the time in the country being called to the user.

28. A telephone as claimed in claim 26 or 27 wherein the display is arranged to display the name of the country being called to the user.

29. A telephone as claimed in any of claims 24 to 28 wherein the user is prompted to confirm that they wish to proceed with a call.

30. A telephone as claimed in any of claims 24 to 29, wherein the database comprises a plurality of MCCs, a plurality of country codes corresponding to the MCCs and a plurality of dialling procedures, wherein one or more of the plurality of dialling procedures is or are associated with each country code.

31. A telephone as claimed in any of claims 24 to 29, wherein information on special dialling procedures are stored on the database for at least one MCC, wherein the information on special dialling procedures relates to the country indicated by the at least one MCC and which are necessary for dialling between the country being dialled to and the country indicated by the obtained MCC when the number is entered; and
wherein means for modifying are configured to modify the entered number to take into account said necessary special dialling procedures.

32. A telephone as claimed in claim 31, wherein, when a country has special dialling procedures, an additional entry is made on the database for the MCC representing that country including information on the special dialling procedures.

33. A telephone as claimed in claim 31, wherein the MCC and the information on dialling procedures comprise a database dialling procedure entry; and wherein each entry includes an indication of special dialling procedures for the country indicated by the MCC.

34. A telephone as claimed in claim 33, wherein the indication of special dialling procedures indicates the additional entry.

35. A telephone as claimed in any of claims 31 to 34, wherein information on special dialling procedures is information on necessary dialling procedures between certain countries.

36. A telephone as claimed in any of claims 31 to 35, further comprising:
means for determining whether the telephone number entered must be dialled according to the special dialling procedures in the country where the number is entered.

37. A computer program for carrying out the methods of any of claims 1 to 23.

38. A telephone configured to operate a computer program according to claim 37.

## Patentansprüche

1. Verfahren zum automatischen Verändern einer eingegebenen Telefonnummer in bzw. bei einem Mobiltelefon, wobei das Verfahren die Schritte beinhaltet:
Bereitstellen einer Datenbank, die Mobil-Ländercodes bzw. -vorwahlen "MCCs" mit entsprechenden Informationen über Wählverfahren für die durch die MCCs angezeigten Länder, darunter Ländercodes bzw. -vorwahlen, in Beziehung setzt;
Abrufen eines MCC aus einem Netzwerk, mit dem das Telefon in Verbindung steht, zum Anzeigen des Landes des Netzwerks,
Vergleichen der eingegebenen Telefonnummer mit Informationen über Wählverfahren aus der Datenbank für den abgerufenen MCC, wenn die Telefonnummer eingegeben wird; und
Verändern bzw. Modifizieren der eingegebenen Telefonnummer in ein vollständiges internationales Format in Abhängigkeit von dem Vergleichsschritt, d.h. Aufnehmen bzw. Einbeziehen eines internationalen Zugangscodes als einem +, einem Ländercode bzw. -vorwahl und einer lokalen bzw. örtlichen Nummer.

2. Verfahren nach Anspruch 1, bei dem die Mobil-Ländercodes entsprechend Standards der Internationalen Fernmeldeunion bestimmt werden.

3. Verfahren nach Anspruch 1 oder 2, bei dem das vollständige internationale Format für jeden Mobil-Ländercode bekannt ist oder zuvor bestimmt wird.

4. Verfahren nach Anspruch 1, 2 oder 3, bei dem die vollständige internationale Standardform aus Standards der Internationalen Fernmeldeunion bestimmt wird.

5. Verfahren nach einem der vorstehenden Ansprüche, das ferner den Schritt beinhaltet, die veränderte Nummer im Telefon zu speichern.

6. Verfahren nach einem der vorstehenden Ansprüche, das ferner den Schritt beinhaltet, die veränderte Nummer auf dem Telefon anzuzeigen.

7. Verfahren nach einem der vorstehenden Ansprüche, bei dem die Datenbank eine Anzahl an MCCs, eine Anzahl an Ländercodes bzw. -vorwahlen, die den MCCs entsprechen, und eine Anzahl von Wählverfahren umfasst, wobei eines oder mehrere aus der Anzahl von Wählverfahren jedem Ländercode zugeordnet ist oder sind.

8. Verfahren nach einem der Ansprüche 1 bis 7, bei dem Informationen über spezielle Wählverfahren in der Datenbank für wenigstens einen MCC gespeichert sind, wobei die Informationen über spezielle Wählverfahren sich auf das Land beziehen, das durch den wenigstens einen MCC angezeigt wird, und welche zum Wählen zwischen dem angewählten Land und dem durch den beim Eingeben der Nummer abgerufenen MCC angezeigten Land erforderlich ist; und
bei dem die eingegebene Nummer verändert wird, um die notwendigen speziellen Wählverfahren zu berücksichtigen.

9. Verfahren nach Anspruch 8, bei dem, wenn ein Land spezielle Wählverfahren hat, ein zusätzlicher Eintrag in der Datenbank für den MCC, der dieses Land repräsentiert, vorgenommen wird, darunter Informationen über die speziellen Wählverfahren.

10. Verfahren nach Anspruch 9, bei dem der MCC und die Informationen über Wählverfahren einen Datenbankeintrag bezüglich Wählverfahren aufweisen; und bei dem jeder Eintrag eine Anzeige bzw. Angabe spezieller Wählverfahren für das durch den MCC angezeigte Land beinhaltet.

11. Verfahren nach Anspruch 10, bei dem die Anzeige spezieller Wählverfahren den zusätzlichen Eintrag anzeigt.

12. Verfahren nach einem der Ansprüche 8 bis 11, bei dem Informationen über spezielle Wählverfahren Informationen über erforderliche Wählverfahren zwischen bestimmten Ländern darstellen.

13. Verfahren nach einem der Ansprüche 8 bis 12, das ferner beinhaltet:
Bestimmen, ob die eingegebene Telefonnummer entsprechend den speziellen Wählverfahren in dem Land, in dem die Nummer eingegeben wird, gewählt werden muss.

14. Verfahren nach einem der Ansprüche 8 bis 13, bei dem die speziellen Wählverfahren aus Standards der Internationalen Fernmeldeunion bestimmt werden.

15. Verfahren nach einem der vorstehenden Ansprüche, das ferner Mittel zum Bestimmen des Namens des angerufenen Landes umfasst.

16. Verfahren nach Anspruch 15, bei dem der Name des angerufenen Landes dem Benutzer angezeigt wird.

17. Verfahren nach einem der vorstehenden Ansprüche, das ferner das Bestimmen der Zeit in dem angerufenen Land beinhaltet.

18. Verfahren nach Anspruch 17, bei dem die Zeit des angerufenen Landes durch Bestimmen der Zeit in dem durch den beim Ausführen des Anrufs abgerufenen MCC angezeigten Land und dem Zeitunterschied zwischen den Zeiten in jedem Land bzw. beiden Ländern bestimmt wird.

19. Verfahren nach Anspruch 18, bei dem die Zeit des angerufenen Landes aus der GMT-Zeit und der Zeitunterschied zwischen dem angerufenen Land und der GMT-Zeit bestimmt wird.

20. Verfahren nach Anspruch 18, bei dem die Zeit des angerufenen Landes aus der CET-Zeit und der Zeitunterschied zwischen dem angerufenen Land und der GMT-Zeit bestimmt wird.

21. Verfahren nach einem der Ansprüche 17 bis 20, das ferner Mittel zum Anzeigen der Anrufszeit in dem angerufenen Land an den Benutzer beinhaltet.

22. Verfahren nach Anspruch 21, bei dem dem Benutzer die momentane Zeit in dem angerufenen Land angezeigt wird.

23. Verfahren nach einem der Ansprüche 17 bis 22, bei dem der Benutzer zur Bestätigung aufgefordert wird, dass sie mit dem Anruf fortfahren wollen.

24. Mobiltelefon, das dazu in der Lage ist, automatisch eine von einem Benutzer eingegebene Telefonnummer zu verändern, mit:
Mitteln zum Zugreifen auf eine Datenbank, die Mobil-Ländercodes "MCCs" mit entsprechenden Informationen über Wählverfahren, darunter Ländercodes bzw. -vorwahlen, für die durch die MCCs angezeigten Länder in Beziehung setzt;
Mitteln zum Abrufen bzw. Erhalten eines MCC aus einem Netzwerk, mit dem das Telefon in Verbindung steht, zum Anzeigen des Landes des Netzwerks;
Mitteln zum Vergleichen der eingegebenen Telefonnummer mit Informationen bezüglich Wählverfahren aus der Datenbank für den erhaltenen MCC, wenn die Telefonnummer eingegeben wird, und
Mitteln zum Verändern bzw. Modifizierten der eingegebenen Telefonnummer in eine vollständige internationale Telefonnummer, d.h. Aufnahme bzw. Einbeziehung eines internationalen Zugangscodes als einem +, einem Ländercode bzw. -vorwahl und einer lokalen bzw. örtlichen Nummer.

25. Telefon nach Anspruch 24, das ferner Mittel zum Speichern der veränderten Nummer für eine nachfolgende Wahlwiederholung aufweist.

26. Telefon nach Anspruch 24 oder 25, wobei das Telefon ferner ein Display aufweist.

27. Telefon nach Anspruch 26, wobei das Display dafür eingerichtet ist, die Zeit in dem angerufenen Land dem Benutzer anzuzeigen.

28. Telefon nach Anspruch 26 oder 27, wobei das Display dafür eingerichtet ist, den Namen des angerufenen Landes dem Benutzer anzuzeigen.

29. Telefon nach einem der Ansprüche 24 bis 28, wobei der Benutzer dazu aufgefordert wird, zu bestätigen, dass sie mit dem Anruf fortfahren wollen.

30. Telefon nach einem der Ansprüche 24 bis 29, bei dem die Datenbank eine Anzahl von MCCs, eine Anzahl von Ländercode bzw. -vorwahlen, die den MCCs entsprechen, und eine Anzahl von Wählverfahren umfasst, wobei eines oder mehrere der Anzahl von Wählverfahren einem jeden Ländercode zugeordnet ist oder sind.

31. Telefon nach einem der Ansprüche 24 bis 29, bei dem Informationen über spezielle Wählverfahren in der Datenbank für wenigstens einen MCC gespeichert sind, wobei die Informationen über spezielle Wählverfahren sich auf das durch den wenigstens einen MCC angezeigte Land beziehen, und die zum Wählen zwischen dem angewählten Land und dem durch den beim Eingeben der Nummer abgerufenen MCC angezeigten Land erforderlich sind; und
wobei Mittel zum Verändern dafür eingerichtet sind, die eingegebene Nummer zu verändern, um die erforderlichen speziellen Wählverfahren zu berücksichtigen.

32. Telefon nach Anspruch 31, bei dem, wenn ein Land spezielle Wählverfahren hat, ein zusätzlicher Eintrag in der Datenbank für den MCC, der dieses Land repräsentiert, vorgenommen wird, der Information über die Spezialwählverfahren beinhaltet.

33. Telefon nach Anspruch 31, bei dem der MCC und die Informationen über Wählverfahren einen Datenbankeintrag bezüglich Wählverfahren aufweisen; und bei dem jeder Eintrag eine Anzeige von Spezialwählverfahren für das durch den MCC angezeigte Land beinhaltet.

34. Telefon nach Anspruch 33, bei dem die Anzeige von Spezialwählverfahren den zusätzlichen Eintrag anzeigt.

35. Telefon nach einem der Ansprüche 31 bis 34, bei dem Informationen über Spezialwählverfahren Informationen über notwendige Wählverfahren zwischen bestimmten Ländern sind.

36. Telefon nach einem der Ansprüche 31 bis 35, das ferner aufweist:
Mittel zum Bestimmen, ob die eingegebene Telefonnummer entsprechend den Spezialwählverfahren in dem Land, in dem die Nummer eingegeben wird, gewählt werden muss.

37. Computerprogramm zum Ausführen der Verfahren nach einem der Ansprüche 1 bis 23.

38. Telefon, das dazu eingerichtet ist, ein Computerprogramm entsprechend Anspruch 37 auszuführen.

## Revendications

1. Procédé pour modifier automatiquement, dans un téléphone mobile, un numéro de téléphone entré, le procédé comportant les étapes consistant à :
fournir une base de données associant des codes de pays mobiles "MCC" à des informations correspondantes sur des procédures de numérotation, incluant des codes ou indicatifs de pays, pour les pays indiqués par les codes ou indicatifs MCCs;
obtenir un code ou indicatifs MCC à partir d'un réseau avec lequel le téléphone est en communication pour indiquer le pays du réseau,
comparer le numéro de téléphone entré à des informations de procédure de numérotation provenant de la base de données pour le code ou indicatifs MCC obtenu lorsque le numéro de téléphone est entré ; et
en fonction de l'étape de comparaison, modifier le numéro de téléphone entré dans un format international complet, c'est-à-dire incluant un code d'accès international sous la forme d'un +, un code de pays et un numéro local.

2. Procédé selon la revendication 1 dans lequel les codes de pays mobiles sont déterminés conformément à des normes de l'Union Internationale des Télécommunications.

3. Procédé selon la revendication 1 ou 2 dans lequel le format international complet pour tout code de pays mobile quelconque est connu ou déterminé au préalable.

4. Procédé selon la revendication 1, 2 ou 3 dans lequel la forme internationale complète standard est déterminée à partir des normes de l'Union Internationale des Télécommunications.

5. Procédé selon l'une quelconque des revendications précédentes comportant en outre l'étape consistant à mémoriser le numéro modifié dans le téléphone.

6. Procédé selon l'une quelconque des revendications précédentes comportant en outre l'étape consistant à afficher le numéro modifié sur le téléphone.

7. Procédé selon l'une quelconque des revendications précédentes, dans lequel la base de données comporte une pluralité de codes ou indicatifs MCC, une pluralité de codes de pays correspondant aux codes ou indicatifs MCC et une pluralité de procédures de numérotation, dans lequel une ou plusieurs procédures parmi la pluralité de procédures de numérotation est ou sont associée(s) à chaque code de pays.

8. Procédé selon l'une quelconque des revendications 1 à 7, dans lequel des informations sur des procédures de numérotation spéciales sont mémorisées dans la base de données pour au moins un code ou indicatifs MCC, dans lequel les informations sur des procédures de numérotation spéciales concernent le pays indiqué par le au moins un code MCC et qui sont nécessaires pour la numérotation entre le pays étant appelé et le pays indiqué par le code ou indicatifs MCC obtenu lorsque le numéro est entré ; et dans lequel le numéro entré est modifié pour prendre en compte lesdites procédures de numérotation spéciales nécessaires.

9. Procédé selon la revendication 8, dans lequel, lorsqu'un pays a des procédures de numérotation spéciales, une entrée supplémentaire est créée dans la base de données pour le code ou indicatifs MCC représentant ce pays incluant des informations sur les procédures de numérotation spéciales.

10. Procédé selon la revendication 9, dans lequel le code ou indicatifs MCC et les informations sur des procédures de numérotation comportent une entrée de procédure de numérotation dans la base de données ; et dans lequel chaque entrée inclut une indication de procédures de numérotation spéciales pour le pays indiqué par le code ou indicatifs MCC.

11. Procédé selon la revendication 10, dans lequel l'indication de procédures de numérotation spéciales indique l'entrée supplémentaire.

12. Procédé selon l'une quelconque des revendications 8 à 11, dans lequel des informations sur des procédures de numérotation spéciales sont des informations sur des procédures de numérotation nécessaires entre certains pays.

13. Procédé selon l'une quelconque des revendications 8 à 12, comportant en outre l'étape consistant à :
déterminer si le numéro de téléphone entré doit être numéroté conformément aux procédures de numérotation spéciales dans le pays lorsque le numéro est entré.

14. Procédé selon l'une quelconque des revendications 8 à 13, dans lequel les procédures de numérotation spéciales sont déterminées à partir des normes de l'Union Internationale des Télécommunications.

15. Procédé selon l'une quelconque des revendications précédentes comportant en outre des moyens pour déterminer le nom du pays étant appelé.

16. Procédé selon la revendication 15 dans lequel le nom du pays étant appelé est affiché à l'utilisateur.

17. Procédé selon l'une quelconque des revendications précédentes comportant en outre l'étape consistant à déterminer l'heure dans le pays étant appelé.

18. Procédé selon la revendication 17 dans lequel l'heure du pays étant appelé est déterminée en déterminant l'heure dans le pays indiqué par le code ou indicatifs MCC obtenu lorsque l'appel est en cours de réalisation et les différences entre les heures dans chaque pays.

19. Procédé selon la revendication 18 dans lequel l'heure du pays étant appelé est déterminée à partir du temps moyen de Greenwich (GMT) et de la différence d'heure entre le pays appelé et GMT.

20. Procédé selon la revendication 18 dans lequel l'heure du pays étant appelé est déterminée à partir de l'heure de l'Europe centrale (CET) et de la différence d'heure entre le pays appelé et GMT.

21. Procédé selon l'une quelconque des revendications 17 à 20 comportant en outre des moyens pour indiquer à l'utilisateur l'heure de l'appel dans le pays étant appelé.

22. Procédé selon la revendication 21 dans lequel l'heure courante dans le pays étant appelé est affichée à l'utilisateur.

23. Procédé selon l'une quelconque des revendications 17 à 22 dans lequel l'utilisateur est invité à confirmer qu'ils souhaitent poursuivre l'appel.

24. Téléphone mobile capable de modifier automatiquement un numéro de téléphone entré par un utilisateur, incluant :
des moyens pour accéder à une base de données associant des codes de pays mobiles "MCC" à des informations
correspondantes sur des procédures de numérotation, incluant des codes ou indicatifs de pays, pour les pays indiqués par les codes ou indicatifs MCC ;
des moyens pour obtenir un code ou indicatifs MCC à partir d'un réseau avec lequel le téléphone est en communication pour indiquer le pays du réseau,
des moyens pour comparer le numéro de téléphone entré à des informations de procédure de numérotation provenant de la base de données pour le code ou indicatifs MCC obtenu lorsque le numéro de téléphone est entré ; et
des moyens pour modifier le numéro de téléphone en un numéro de téléphone international complet, c'est-à-dire incluant un code d'accès international sous la forme d'un +, un code de pays et un numéro local.

25. Téléphone selon la revendication 24 comportant en outre des moyens pour mémoriser le numéro modifié en vue d'une renumérotation ultérieure.

26. Téléphone selon la revendication 24 ou 25 dans lequel le téléphone comporte un écran.

27. Téléphone selon la revendication 26 dans lequel l'écran est conçu pour afficher à l'utilisateur l'heure dans le pays étant appelé.

28. Téléphone selon la revendication 26 ou 27 dans lequel l'écran est conçu pour affiche à l'utilisateur le nom du pays étant appelé.

29. Téléphone selon l'une quelconque des revendications 24 à 28 dans lequel l'utilisateur est invité à confirmer qu'ils souhaiteut poursuivre l'appel.

30. Téléphone selon l'une quelconque des revendications 24 à 29, dans lequel la base de données comporte une pluralité de codes ou indicatifs MCC, une pluralité de codes de pays correspondant aux codes ou indicatifs MCC et une pluralité de procédures de numérotation, dans lequel une ou plusieurs procédures parmi la pluralité de procédures de numérotation est ou sont associée(s) à chaque code de pays.

31. Téléphone selon l'une quelconque des revendications 24 à 29, dans lequel des informations sur des procédures de numérotation spéciales sont mémorisées dans la base de données pour au moins un code ou indicatifs MCC, dans lequel les informations sur des procédures de numérotation spéciales concernent le pays indiqué par le au moins un code ou indicatifs MCC et qui sont nécessaires pour la numérotation entre le pays étant appelé et le pays indiqué par le code ou indicatifs MCC obtenu lorsque le numéro est entré ; et dans lequel des moyens de modification sont configurés pour modifier le numéro entré afin de prendre en compte lesdites procédures de numérotation spéciales nécessaires.

32. Téléphone selon la revendication 31, dans lequel, lorsqu'un pays a des procédures de numérotation spéciales, une entrée supplémentaire est créée dans la base de données pour le code ou indicatifs MCC représentant ce pays incluant des informations sur les procédures de numérotation spéciales.

33. Téléphone selon la revendication 31, dans lequel le code ou indicatifs MCC et les informations sur des procédures de numérotation comportent une entrée de procédure de numérotation dans la base de données ; et dans lequel chaque entrée inclut une indication de procédures de numérotation spéciales pour le pays indiqué par le code ou indicatifs MCC.

34. Téléphone selon la revendication 33, dans lequel l'indication de procédures de numérotation spéciales indique l'entrée supplémentaire.

35. Téléphone selon l'une quelconque des revendications 31 à 34, dans lequel des informations sur des procédures de numérotation spéciales sont des informations sur des procédures de numérotation nécessaires entre certains pays.

36. Téléphone selon l'une quelconque des revendications 31 à 35, comportant en outre:
des moyens pour déterminer si le numéro de téléphone entré doit être numéroté conformément aux procédures de numérotation spéciales dans le pays lorsque le numéro est entré.

37. Programme informatique pour mettre en oeuvre les procédés selon l'une quelconque des revendications 1 à 23.

38. Téléphone configuré pour faire fonctionner un programme informatique selon la revendication 37.
